# EUROPÄISCHE PATENTSCHRIFT

(11) **EP 0 683 581 B1**
(45) Veröffentlichungstag und Bekanntmachung des Hinweises auf die Patenterteilung: **28.09.2005**
(21) Anmeldenummer: 95107237.0
(22) Anmeldetag: 12.05.1995
(51) Int. Cl.: H04L 7/04, H04J 3/06

(54) **Synchronisationsverfahren sowie Synchronisationseinrichtung, Endgerät und Vermittlungsstelle dafür**
Synchronisation method, synchronisation circuit, exchange end terminal
Méthode de synchronisation, circuit de sychronisation, centrale et terminale

(30) Priorität: 21.05.1994 DE 4417954
(43) Veröffentlichungstag der Anmeldung: 22.11.1995
(73) Patentinhaber: ALCATEL, 75008 Paris (FR)
(72) Erfinder: Bunse, Stephan, D-70374 Stuttgart (DE)
(74) Vertreter: Brose, Gerhard

(56) Entgegenhaltungen:
- EP-A- 0 141 194
- EP-A- 0 425 470
- GB-A- 1 577 331
- IEEE TRANSACTIONS ON COMMUNICATIONS, Bd. 38, Nr. 10, 1.Oktober 1990 Seiten 1900-1912, XP 000176878 KAMRAN KIASALEH ET AL 'TIME AND FREQUENCY TRANSFER BETWEEN MASTER AND SLAVE CLOCKS'

## Beschreibung

Die Erfindung betrifft ein Verfahren zur Synchronisation eines ersten Taktes einer ersten Station mit einem zweiten Takt einer zweiten Station nach dem Oberbegriff von Anspruch 1, eine Synchronisationseinrichtung für eine erste Station nach dem Oberbegriff von Anspruch 6, und eine Synchronisationseinrichtung für eine zweite Station nach dem Oberbegriff von Anspruch 8.

Aus GB-A-1 577 331 ist bereits eine für Vermittlungsstellen vorgesehene Synchronisationseinrichtung bekannt. Es dient der Synchronisation von Vermittlungsstellen untereinander.

Bei der optischen Daten-Übertragung stellen sich im Allgemeinen neue Anforderungen in Bezug auf die Takt-Synchronisation. Es ist hier wünschenswert, die Takt-Synchronisation möglichst auf optischem Wege durchzuführen und möglichst auf opto-elektrische Wandler zu verzichten.

Die Erfindung geht nun von einer Synchronisationseinrichtung aus, wie sie beispielsweise in der PCT-Anmeldung WO 91/15907 beschrieben ist. Diese PCT-Anmeldung beschreibt eine Übertragungseinrichtung, die aus einer Sendeeinrichtung und mehreren Zugriffsknoten besteht und bei der die Takte der Zugriffsknoten auf den Takt der Sendeeinrichtung synchronisiert werden sollen. Die Sendeeinrichtung ist mit den Zugriffsknoten über eine optische Faser verbunden und sendet über diese eine Bitfolge als Synchronisationssignal an die Zugriffsknoten. Dieses Synchronisationssignal wird in den Zugriffsknoten von der Faser abgezweigt und einer Synchronisationseinrichtung zugeführt.

Diese bekannte Synchronisationseinrichtung enthält ein elektrisch steuerbares optisches Schaltglied, einen opto-elektrischen-Wandler, einen Taktgeber, einen Sequenzgeber, einen Integrator und einen Regler.

Der Sequenzgeber erzeugt im Takt des Taktgebers eine Bitfolge. Mittels des Schaltgliedes wird diese Bitfolge mit der als Synchronisationssignal dienenden, von der Faser abgezweigten Bitfolge korreliert. Das sich so ergebende optische Signal wird durch den Wandler in ein elektrisches Signal umgewandelt, im Integrierer integriert und das Ergebnis der Integration dem Regler zugeführt. Der Regler bestimmt mittels des Integrations-Ergebnisses die Taktabweichung zwischen dem Takt des Taktgebers und dem durch das Synchronisationssignal beschriebenen Takt auf der Faser und steuert den Taktgeber so an, daß diese Taktdifferenz verschwindet und der Takt des Taktgebers dem Takt auf der Faser entspricht.

Der Nachteil dieses Synchronisationsverfahrens ist, daß es nur eine spezielle Lösung für den Fall eines verteilten Vermittlungssystems darstellt. Es ist mit ihm nur möglich, die Taktsynchronisation für das Senden von Datenpaketen von einer taktgebenden zu einer oder mehreren taktfolgenden Stationen durchzuführen. Dadurch ist es beispielsweise mit diesem Verfahren nicht möglich, das Senden von Datenpaketen von Endgeräten zu einer zentralen Vermittlungsstelle im Takt der Vermittlungsstelle sicherzustellen.

Es ist nun die Aufgabe der Erfindung, den Takt einer ersten, taktgebenden Station auf den Takt einer zweiten, taktfolgende Stationen zu synchronisieren.

Die Aufgabe wird gelöst durch ein Verfahren nach der Lehre von Anspruch 1, durch Synchronisationseinrichtungen nach der Lehre von Anspruch 6 und Anspruch 7, durch ein Endgerät nach der Lehre von Anspruch 9 und durch eine Vermittlungsstelle nach der Lehre von Anspruch 10.

Der Grundgedanke der Erfindung ist, daß die Korrelation der Synchronisationssignale in der taktgebenden Station stattfindet, das sich ergebende Korrelationssignal jedoch nicht in dieser Station ausgewertet wird, sondern an die taktfolgende Station gesendet wird, wo sodann der Takt der taktfolgenden Station mittels der Auswertung nachgeregelt wird.

Vorteilhafte Ausgestaltungen der Erfindung sind den Unteransprüchen zu entnehmen.

Die Erfindung hat den Vorteil, daß in der taktgebenden Station nur optische Schalter, jedoch keine opto-elektrischen-Wandler benötigt werden. Es ist so möglich, dort die Takt-Synchronisation auf rein optischem Wege durchzuführen. In einem aus mehreren taktfolgenden Endgeräten und einer taktgebenden Vermittlungsstelle bestehenden Kommunikationssystem sind so in der Vermittlungsstelle keine opto-elektrischen Wandler nötig, um die Endgeräte auf den Takt der Vermittlungsstelle zu synchronisieren. Da die Endgeräte durch die Erfindung auf den Takt der Vermittlungsstelle synchronisiert sind, ist es auch nicht notwendig, in der Vermittlungsstelle Zwischenspeicher für die Takt-Synchronisation vorzusehen. Solche Zwischenspeicher sind optisch nur schlecht oder überhaupt nicht realisierbar. Damit wird es möglich, eine rein optische Vermittlungsstelle zu bauen.

Im Endgerät wird bei optischer Übertragung notwendigerweise eine opto-elektrische Wandlung der empfangenen optischen Daten durchgeführt und damit liegt das Korrelationssignal bereits in elektrischer Form vor. So ist im Endgerät kein zusätzlicher opto-elektrischer Wandler für das Korrelationssignal notwendig und es wird als weiterer Vorteil ein opto-elektrischer Wandler pro angeschlossenem Endgerät eingespart.

Im folgenden wird nun die Erfindung anhand eines Ausführungsbeispiels unter Zuhilfenahme beiliegender Zeichnungen weiter erläutert.
- Fig. 1: zeigt mehrere erfindungsgemäße Endgeräte und eine erfindungsgemäße Vermittlungsstelle.
- Fig. 2: zeigt ein erfindungsgemäßes Endgerät nach Fig. 1 mit einer erfindungsgemäßen Synchronisationseinrichtung.
- Fig. 3: zeigt einen Ausschnitt aus einer erfindungsgemäßen Synchronisationseinrichtung für die Vermittlungsstelle nach Fig. 1.

Im Ausführungsbeispiel wird nun die Anwendung des erfindungsgemäßen Verfahrens in einem Kommunikationssystem erläutert, das aus mehreren erfindungsgemäßen Endgeräten und einer erfindungsgemäßen Vermittlungsstelle, jeweils mit erfindungsgemäßen Synchronisationseinrichtungen, besteht.

Es ist auch möglich, die Erfindung auf eine andere Kommunikationsanordnung mit zwei oder mehr Stationen anzuwenden. Voraussetzung dafür ist, daß eine der Stationen die taktgebende Station ist und diese Station mit den übrigen Stationen über bidirektionale Datenwege verbunden ist.

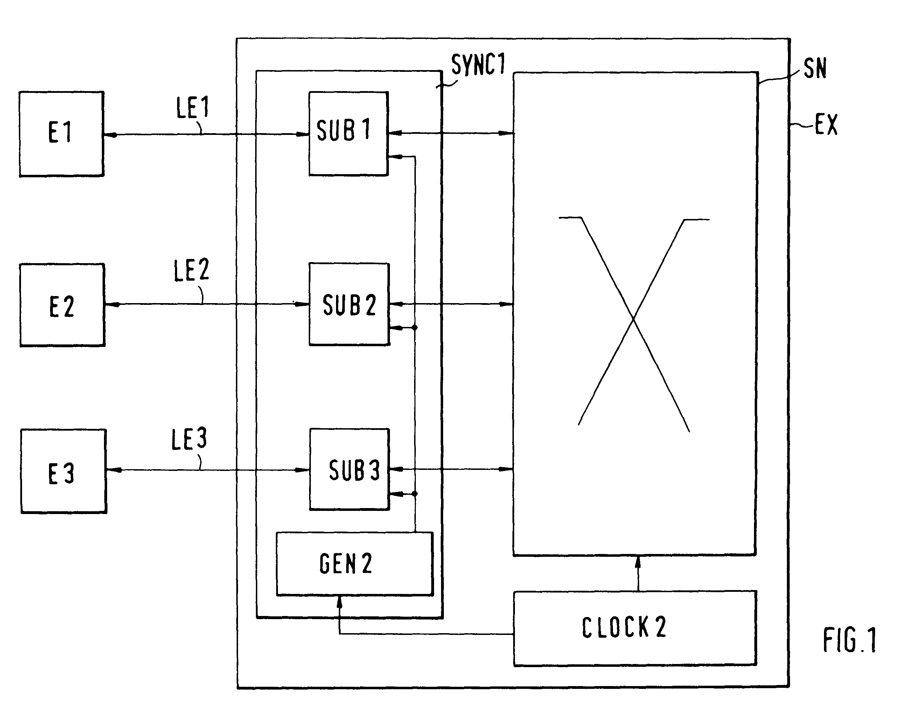

Fig. 1 zeigt drei Endgeräte E1 bis E3 und eine Vermittlungsstelle EX. Die Vermittlungsstelle EX ist mit jedem der Endgeräte E1 bis E3 über eine bidirektionale Verbindungsleitung LE1, LE2, bzw. LE3 verbunden.

Die Vermittlungsstelle EX weist einen Taktgenerator CLOCK2, ein Koppelnetz SN und eine Synchronisationseinrichtung SYNC2 mit einem Bitfolgengenerator GEN2 und drei Teil-Synchronisationseinrichtungen SUB1 bis SUB3 auf. Die Teil-Synchronisationseinrichtungen SUB1 bis SUB3 sind mit dem Bitfolgengenerator GEN2, dem Koppelnetz SN und mit den Verbindungsleitungen LE1, LE2 bzw. LE3 verbunden. Der Taktgenerator CLOCK2 ist mit dem Koppelnetz SN und mit dem Bitfolgengenerator GEN2 verbunden.

Die Endgeräte E1 bis E3 werden von beliebigen Kommunikations-Endgeräten, beispielsweise für Sprach-, Daten- oder Videokommunikation, gebildet. Sie verfügen über jeweils einen optischen Ein- und Ausgang für die Kommunikation mit der Vermittlungsstelle EX. Über diesen Ein- und Ausgang tauschen sie Datenpakete mit der Vermittlungsstelle EX aus.

Es ist auch möglich, daß die Endgeräte E1 bis E3 mit der Vermittlungsstelle EX mittels eines synchronen Übertragungsverfahrens kommunizieren.

Die Verbindungsleitungen LE1 bis LE3 werden jeweils von zwei Glasfaserkabeln, für jede Richtung eines, gebildet.

Es ist auch möglich, nur ein Glasfaserkabel mit zwei Kanälen zu verwenden. Diese Kanäle könnten beispielsweise durch die Verwendung von optischen Gabelschaltungen oder durch Zeitgetrenntlagen- oder Frequenzmultiplex erzeugt werden.

Es ist weiter möglich, daß es sich bei den Verbindungsleitungen LE1 bis LE3 um elektrische Leitungen handelt und das erfindungsgemäße Synchronisierverfahren mit rein elektrischen Mitteln arbeitet.

Die Vermittlungsstelle EX verfügt über optische Ein- und Ausgänge und vermittelt Datenpakete, die von den Endgeräten E1 bis E3 an sie gesendet werden.

Es ist auch möglich, daß noch weitere Endgeräte oder weitere Vermittlungsstellen mit der Vermittlungsstelle EX verbunden sind. Solche Endgeräte oder Vermittlungsstellen könnten auch ein anderes Synchronisierverfahren verwenden oder die Datenpakete auf elektrischem anstelle von auf optischem Weg übermitteln.

Die Endgeräte E1 bis E3 senden über die Verbindungsleitung LE1, LE2, bzw. LE3 Datenpakete an die Vermittlungsstelle EX, die die Datenpakete sodann vermittelt und an das Ziel-Endgerät, das eines der Endgeräte E1 bis E3 ist, über die entsprechende der Verbindungsleitungen LE1 bis LE3 sendet. Um diese Vermittlung zu ermöglichen, senden die Endgeräte E1 bis E3 Synchronisationssignale an die Vermittlungsstelle EX, in der diese Synchronisationssignale mit einem die Takte der Vermittlungsstelle EX enthaltendes Synchronisationssignal korreliert werden und das sich jeweils ergebende Korrelationssignal an das Endgerät E1, E2, bzw. E3 zurückgesandt wird. Mittels dieser Korrelationssignale werden sodann die Takte des Endgerätes E1, E2 bzw. E3 auf die Takte der Vermittlungsstelle aufsynchronisiert.

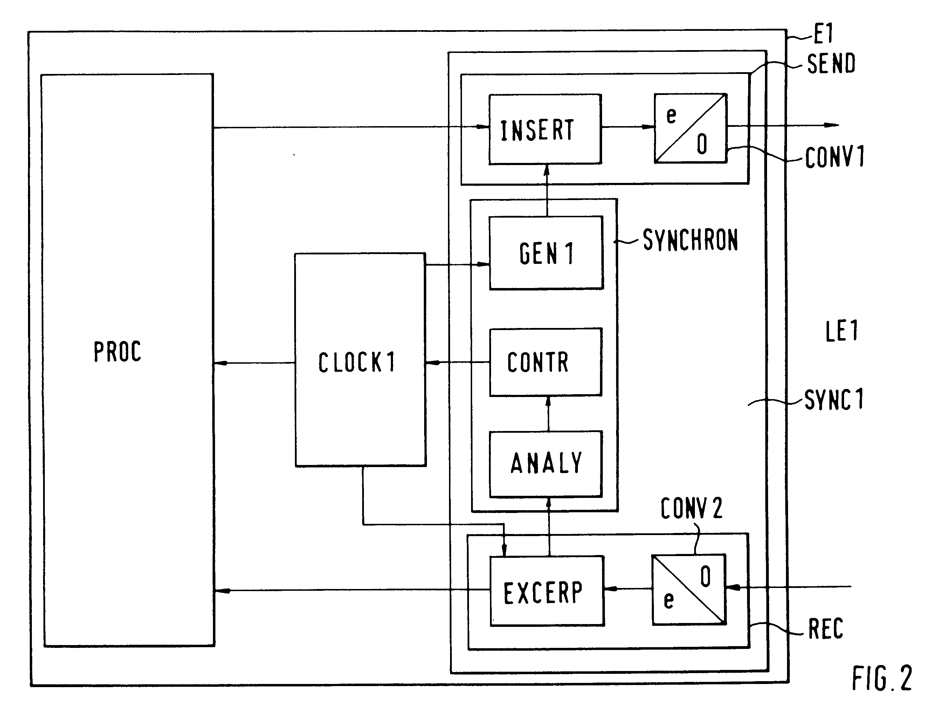

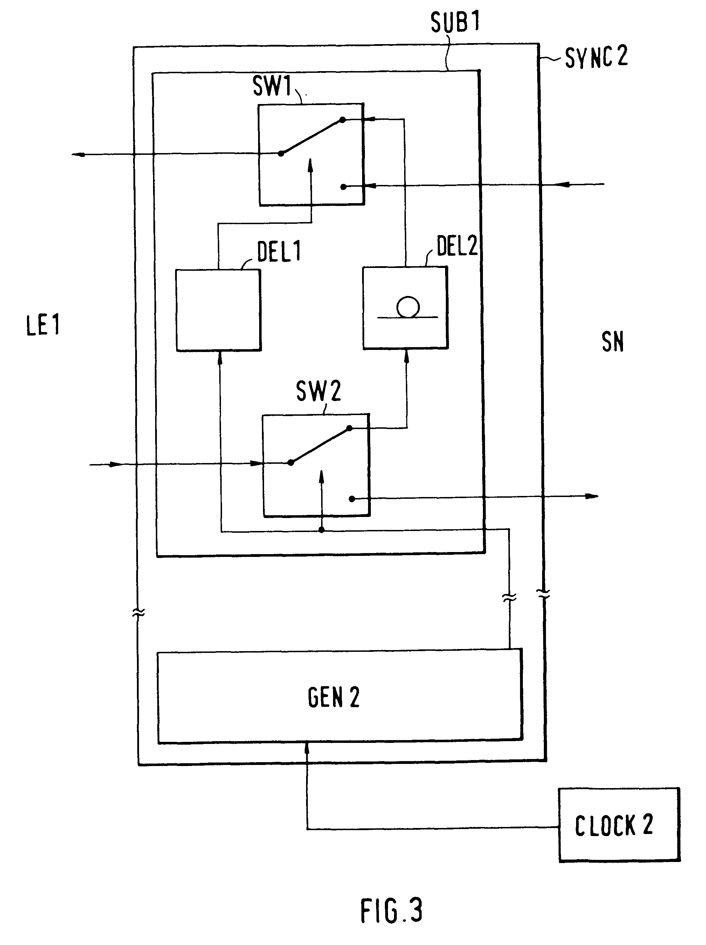

Die Endgeräte E1 bis E3 sind gleich aufgebaut. So wird hier nur beispielshaft der Aufbau von dem Endgerät E1 anhand von Fig. 2 beschrieben. Der interne Aufbau der Vermittlungsstelle EX wird weiter unten, anhand von Fig. 1 und Fig. 3 beschrieben.

Fig. 2 zeigt das Endgerät E1, das Daten an die Verbindungsleitung LE1 sendet und Daten von der Verbindungsleitung LE1 empfängt. Das Endgerät E1 weist eine Bearbeitungseinrichtung PROC, einen Taktgenerator CLOCK1 und eine Synchronisationseinrichtung SYNC 1 mit einer Sendeeinrichtung SEND, mit einer Empfangseinrichtung REC und mit einem Synchronisierer SYNCHRON auf.

Die Sendeeinrichtung SEND, die Empfangseinrichtung REC, die Bearbeitungseinrichtung PROC und der Synchronisierer SYNCHRON empfangen jeweils Taktsignale von dem Taktgenerator CLOCK1. Die Sendeeinrichtung SEND empfängt Datenpakete von der Bearbeitungseinrichtung PROC und sendet Datenpakete über die Verbindungsleitung LE1. Die Empfangseinrichtung REC empfängt Datenpakete über die Verbindungsleitung LE1 und sendet Datenpakete an die Bearbeitungseinrichtung PROC. Der Synchronisierer SYNCHRON sendet Daten an die Sendeeinrichtung SEND, empfängt Daten von der Empfangseinrichtung REC und sendet Steuersignalen an den Taktgenerator CLOCK1.

Die Bearbeitungseinrichtung PROC führt die Funktionen des Endgerätes E1 aus und kommuniziert mit den anderen Endgeräten E1 und E2 durch den Austausch von Datenpaketen. Hierfür sendet sie Datenpakete in einem durch den Taktgenerator CLOCK1 bestimmten Rahmen- und Bittakt an die Sendeeinrichtung SEND und empfängt von der Empfangseinrichtung REC Datenpakete.

Die Sendeeinrichtung SEND fügt zwischen die Datenpakete Synchronisationssignale ein, die sie von dem Synchronisierer SYNCHRON erhält und sendet den so erhaltenen Datenstrom über die Verbindungsleitung LE1.

Die Empfangseinrichtung REC trennt in dem über die Verbindungsleitung LE1 empfangenen Datenstrom die Korrelationssignale von den Datenpaketen und gibt die Korrelationssignale an den Synchronisierer SYNCHRON und die Datenpakete an die Bearbeitungseinrichtung PROC weiter.

Der Taktgenerator CLOCK1 legt den Rahmen- und den Bittakt fest, dem die von der Bearbeitungseinrichtung PROC und von der Sendeeinrichtung SEND abgehenden Datenpakete entsprechen. Es ist auch möglich, daß der Taktgenerator CLOCK1 weitere oder andere Takte oder Taktbeziehungen festlegt.

Der Synchronisierer SYNCHRON sendet an die Sendeeinrichtung SEND Synchronisationssignale, die den Rahmen- und den Bittakt des Taktgenerators CLOCK1 enthalten und empfängt von der Empfangseinrichtung REC Korrelationssignale, mittels derer sie den Rahmen- und den Bittakt des Taktgenerators CLOCK1 verändert.

Die Sendeeinrichtung SEND weist eine Einfügeeinrichtung INSERT und einen Wandler CONV1 auf.

Die Datenpakete von der Bearbeitungseinrichtung PROC werden von der Einfügeeinrichtung INSERT an den Wandler CONV 1 weitergeleitet und die Einfügeeinrichtung INSERT empfängt Synchronisationssignale von der Synchronisationseinrichtung SYNC.

Der Rahmentakt des Taktgenerators CLOCK1 ist so gewählt, daß zwischen den Datenpaketen, die die Einfügeeinrichtung INSERT von der Bearbeitungseinrichtung PROC empfängt, jeweils ein Sicherheits-Zeitabschnitt (auch guard times genannt) liegt. Diese Zeitabschnitte sind bei einer Taktrate im Gbit/s-Bereich notwendig, da die Vermittlungsstelle EX zwischen der Vermittlung zweier aufeinanderfolgenden Datenpakete einen gewissen Sicherheitsabstand zum Umschalten der optischen Komponenten benötigt. Während der diesem Sicherheitsabstand entsprechenden Zeitdauer, beispielsweise 5ns, ist die Vermittlungsstelle EX nicht in der Lage ein neues Datenpaket zu vermitteln.

Die Einfügeeinrichtung INSERT blendet in diese Zeitabschnitte jeweils ein Synchronisationssignal ein, das sie von dem Synchronisierer SYNCHRON erhält. Handelt es sich um ein digitales Synchronisationssignal, so kann die Einfügeeinrichtung INSERT von einem ODER-Gatter gebildet werden. Es ist auch möglich, daß die Einfügeeinrichtung nicht in jeden Zeitschlitz ein Synchronisationssignal einblendet sondern beispielsweise in jeden zweiten Zeitabschnitt.

Der Wandler CONV1 ist ein elektro-optischer Wandler, der den elektrischen in einen optischen Datenstrom umwandelt.

Die Empfangseinrichtung REC weist eine Austrageeinrichtung EXCERP und einen Wandler CONV2 auf.

Der über die Verbindungsleitung LE1 empfangene Datenstrom wird über den Wandler CONV2 und die Einfügeeinrichtung EXCERP an die Bearbeitungseinrichtung PROC weitergeleitet. Die Austrageeinrichtung EXCERP empfängt Taktsignale von dem Taktgenerator CLOCK1 und sendet Korrelationssignale an den Synchronisierer SYNCHRON.

Der Wandler CONV2 ist ein opto-elektrischer Wandler und wandelt den optischen Datenstrom von der Verbindungsleitung LE1 in einen elektrischen Datenstrom um.

Die Austrageeinrichtung EXCERP blendet die Korrelationssignale aus den Zeitabschnitt zwischen den Datenpaketen aus und leitet sie an die Synchronisationseinrichtung SYNC weiter. Um diese Zeitschlitze zu erkennen, erhält sie von dem Taktgenerator CLOCK1 den Bit- und Rahmentakt mitgeteilt.

Es ist auch möglich, daß die Sendeeinrichtung SEND oder die Empfangseinrichtung REC anders aufgebaut sind.

Insbesondere ist es möglich, die Synchronisations- und Korrelationssignale nicht in Zeitabschnitten zwischen die Datenpakete ein- bzw. auszublenden, sondern an eine bestimmte Stelle innerhalb der Datenpakete ein- bzw. auszutragen. Es wäre auch möglich, die Übertragung der Synchronisationssignale von der Übertragung der Datenpakete abzutrennen und jeweils eigene Kanäle bereitzustellen.

Weiter ist es möglich, die Datenpakete nicht in optischer Form von dem Endgerät E1 zu der Vermittlungsstelle EX1 zu übermitteln und so auf den Wandler CONV1 bzw. CONV2 zu verzichten.

Der Synchronisierer SYNCHRON weist einen Bitfolgengenerator GEN1, eine Steuereinrichtung CONTR und einen Bewerter ANALY auf.

Der Bitfolgengenerator GEN1 empfängt Taktsignale von dem Taktgenerator CLOCK1 und sendet Bitfolgen als Synchronisationssignale an die Einfügeeinrichtung INSERT. Der Bewerter ANALY empfängt Korrelationssignale von der Austrageeinrichtung EXCERP und gibt Daten an die Steuereinrichtung CONTR weiter. Die Steuereinrichtung CONTR sendet Steuersignale an den Taktgenerator CLOCK1.

Der Bitgenerator GEN1 erzeugt periodisch eine den Bit- und Rahmentakt des Taktgenerators CLOCK1 enthaltende Bitfolge als Synchronisationssignal. Es handelt sich hierbei immer um dieselbe korrelationsfähige Bitfolge, beispielsweise um einen Hardamard-Code. Eine solche Bitfolge ist z.B. die Bitfolge 1110010011101000011111000000111. Diese Bitfolge wird im Bittakt des Taktgenerators CLOCK1 zu einem bestimmten Zeitpunkt innerhalb des Rahmentaktes des Taktgenerators CLOCK1 erzeugt. Dieser Zeitpunkt ist dabei so gewählt, daß die erzeugte Bitfolge in einen der Zeitschlitze zwischen den Datenpaketen fällt. Die Rahmen- und Bittakt-Information ist damit in der zeitlichen Lage und in dem Bittakt der Taktfolge enthalten. Es ist auch möglich, daß der Bitfolgengenerator GEN1 durch einen Generator ersetzt wird, der ein analoges Synchronisationssignal anstelle einer digitalen Synchronisationsbitfolge erzeugt.

Der Bewerter ANALY empfängt von der Austrageeinrichtung EXCERP ein Korrelationssignal. Anhand dieses Korrelationssignals ermittelt er, wie groß die Taktabweichung zwischen dem Bit- und Rahmentakt der Vermittlungsstelle EX und dem des Endgerätes E1 ist. Der Bewerter ANALY besteht beispielsweise aus einem Integrierer, der über das Korrelationssignal integriert, wobei der sich ergebende Wert ein Maß für die Synchronität dieser Takte ist.

Die Steuereinrichtung CONTR regelt mittels des Ergebnisses des Bewerters ANALY den Bit- und den Rahmentakt des Taktgenerators CLOCK1 nach.

Zwischen die von der Bearbeitungseinrichtung PROC stammenden Datenpakete wird so von der Einfügeeinrichtung INSERT jeweils eine Synchronisationsbitfolge eingetragen. Diese Synchronisationsbitfolge wird von dem Bitfolgengenerator GEN1 im Bit- und Rahmentakt des Taktgenerators CLOCK1 erzeugt. Der so entstandene Datenstrom wird von dem Wandler CONV1 elektro-optisch gewandelt und über die Verbindungsleitung LE1 an die Vermittlungsstelle EX gesendet. Der von der Vermittlungsstelle über die Verbindungsleitung LE1 empfangene Datenstrom wird von dem Wandler CONV2 optisch-elektrisch gewandelt. Anschließend werden aus den Zeitabschnitten zwischen den Datenpaketen die Korrelationssignale, die die Antwort der Vermittlungsstelle EX auf die Synchronisationsbitfolge darstellen, von der Austrageeinrichtung EXCERP ausgeblendet und von dem Bewerter ANALY ausgewertet. Mittels dieser Auswertung wird der Bit- und Rahmentakt des Taktgenerators CLOCK1 von der Steuereinrichtung CONTR nachgeregelt. Die Datenpakete werden von der Austrageeinrichtung EXCERP an die Bearbeitungseinrichtung PROC weitergeleitet.

Der Aufbau der Vermittlungsstelle EX ist in Fig. 1 und Fig. 3 gezeigt.

Nach Fig. 1 weist die Vermittlungsstelle EX die Synchronisationseinrichtung SYNC2, den Taktgenerator CLOCK2 und das Koppelnetz SN auf. Die Endgeräte E1 bis E3 sind über die Synchronisationseinrichtung SYNC2 mit dem Koppelnetz SN verbunden. Die Synchronisationseinrichtung SYNC2 und das Koppelnetz SN erhalten Taktsignale von dem Taktgenerator CLOCK2.

Bei dem Koppelnetz SN handelt es sich um ein rein optisches Koppelnetz. Es vermittelt Datenpakete, die ihm in optischer Form entsprechend des Bit- und Rahmentaktes des Taktgenerators CLOCK2 zugeführt werden. Wegen der internen Schaltzeiten ist der Rahmentakt so ausgelegt, daß zwischen den Datenpaketen Zeitabschnitte liegen, in denen die internen Umschaltvorgänge ablaufen können.

Der Taktgenerator CLOCK2 erzeugt den Bit- und Rahmentakt der Vermittlungsstelle EX.

Die Synchronisationseinrichtung SYNC2 ist für die Synchronisierung des Bit- und Rahmentaktes der Endgeräte E1 bis E3 auf den Bit- und Rahmentakt des Taktgenerators CLOCK2 zuständig.

Die Synchronisationseinrichtung SYNC2 synchronisiert ständig den Takt der Endgeräte E1 bis E3 auf den Takt des Taktgenerators CLOCK2. Dadurch treffen die Datenpakete von den Endgeräten E1 bis E3 zum richtigen Zeitpunkt an der Vermittlungsstelle EX ein und können sofort, ohne Zwischenspeicherung, dem Koppelnetz SN zugeführt werden. Dieses vermittelt sodann die Datenpakete und sendet sie an die Ziel-Endgeräte.

Die Synchronisationseinrichtung SYNC2 weist die Teil-Synchronisationseinrichtungen SUB1 bis SUB3 und den Bitfolgengenerator GEN2 auf. Der Bitfolgengenerator GEN2 sendet an alle Teil-Synchronsationseinrichtungen SUB1 bis SUB3 Daten. Die Teil-Synchronisationseinrichtungen SUB1 bis SUB3 senden und empfangen Datenpakete von dem Koppelnetz SN und dem Endgerät E1, E2, bzw. E3.

Die Teil-Synchronisationseinrichtungen SUB 1 bis SUB 3 sind gleich aufgebaut. So wird im folgenden der genaue Aufbau der Synchronisationseinrichtung SYNC2 anhand von Fig. 1 verdeutlicht, die den Bitfolgengenerator GEN1 und beispielhaft die Teil-Synchronisationseinrichtung SUB1 beschreibt.

Fig. 3 zeigt den Taktgenerator CLOCK2, den Bitfolgengenerator GEN2 und die Teil-Synchronisationseinrichtung SUB1. Der Taktgenerator CLOCK2 sendet Taktsignale an den Bitfolgengenerator GEN2, der seinerseits Daten an die Teil-Synchronisationseinrichtung SUB1 sendet. Die Teil-Synchronisationseinrichtung SUB1 sendet und empfängt Datenströme über die Verbindungsleitung LE1 und von dem Koppelnetz SN.

Der Bitfolgengenerator GEN2 erzeugt periodisch Bitfolgen, die als Synchronisationssignale dienen. Diese Bitfolgen enthalten den durch den Taktgenerator CLOCK2 festgelegten Bit- und Rahmentakt.

Bei diesen Bitfolgen handelt sich hierbei immer um dieselbe Bitfolge, die gleich der vom Bitfolgengenerator GEN1 erzeugten Bitfolge ist. Die Bit- und Rahmentakt-Information ist wie beim Bitfolgengenerator GEN1 in der zeitlichen Lage und in dem Bittakt einer solchen Bitfolge enthalten.

Die Teil-Synchronisationseinrichtung SUB1 korreliert die in dem von dem Endgerät E1 stammenden Datenstrom enthaltenen Synchronisationssignale mit dem von dem Bitfolgengenerator GEN2 stammenden Synchronisationssignale und sendet die sich ergebenden Korrelationsignale an das Endgerät E1 zurück.

Die Teil-Synchronisationseinrichtung SUB1 weist zwei Schalter SW1 und SW2 und zwei Verzögerungseinrichtungen DEL1 und DEL2.

Der Schalter SW2 empfängt von dem Bitfolgengenerator GEN2 Bitfolgen als Steuerbefehle und der Schalter SW1 empfängt von dem Bitfolgengenerator GEN2 über die Verzögerungseinrichtung DEL1 ebenfalls Bitfolgen als Steuerbefehle. Der Schalter SW1 empfängt Datenströme von dem Koppelnetz SN und sendet Datenströme über die Verbindungsleitung LE1. Der Schalter SW2 empfängt Datenströme über die Verbindungsleitung LE1 und sendet Datenströme an das Koppelnetz SN. Die Schalteinrichtung SW2 sendet an die Schalteinrichtung SW1 Daten über die Verzögerungseinrichtung DEL2.

Die Schalter SW1 und SW2 werden jeweils von einem optischen Schalter gebildet, der elektrisch gesteuert wird. Er hat einen optischen Eingang bzw. Ausgang und zwei optische Ausgänge bzw. Eingänge. Mittels eines elektrischen Steuersignals kann ein Verbindungsweg zwischen dem Eingang bzw. Ausgang und einem der Ausgänge bzw. Eingänge geschaltet werden. Die Schalter SW1 und SW2 werden so beispielsweise jeweils von einem integrierten optischen Richtungskoppler gebildet, wie er in der PCT-Anmeldung WO 91/15907 beschrieben ist.

Die Verzögerungseinrichtung DEL2 verzögert einen von dem Schalter SW2 stammenden optischen Datenstrom und leitet ihn an den Schalter SW1 weiter. Die Zeitdauer der Verzögerung ist dabei so gewählt, daß eine mit dem Schalter SW2 erzeugte Korrelationsbitfolge wieder genau in den Zeitabschnitt zwischen die vom Schalter über die Verbindungsleitung LE1 gesendeten Datenpakete eingefügt wird. Die Verzögerungseinrichtung DEL2 wird beispielsweise von einer Faserverzögerungsschleife und eventuell einem optischen Verstärker zum Ausgleich der Dämpfung gebildet.

Die Verzögerungseinrichtung DEL1 verzögert die Bitfolge von dem Bitfolgengenerator GEN2 um dieselbe Zeitdauer wie die Verzögerungseinrichtung DEL2. Da es sich hier um elektrische Signale handelt, wird die Verzögerungseinrichtung DEL2 beispielsweise von einem Schieberegister gebildet.

Ein optischer Datenstrom, der aus einer Folge von Datenpaketen und zwischen ihnen eingefügten Synchronisationsbitfolgen besteht, kommt an dem Eingang des Schalters SW2 an. Der Schalter SW2 wird von den in dem Bitfolgengenerator GEN2 erzeugten Bitfolgen gesteuert. Eine solche Bitfolge wird von dem Bitfolgengenerator GEN2 einmal innerhalb des Rahmentaktes des Taktgenerators CLOCK2 im Bittakt des Taktgenerators CLOCK2 ausgesendet. Bei Synchronität des Bit- und Rahmentaktes des Endgerätes E1 und der Vermittlungsstelle EX fallen diese Bitfolgen genau mit den Synchronisationsbitfolgen zwischen den Datenpaketen zusammen. In der restlichen Zeit wird der Schalter SW2 von dem Bitfolgengenerator GEN2 durch eine 0...0 Bitfolge so angesteuert, daß der ankommende Datenstrom an das Koppelnetz SN weitergeleitet wird. Durch das Umschalten des Schalters SW2 entsprechend der von dem Bitfolgengenerator GEN2 stammenden Bitfolge werden nun die von dem Endgerät E1 stammende Synchronisationsbitfolge und die von dem Bitfolgengenerator GEN2 erzeugte Synchronisationsbitfolge korreliert. Wenn beispielsweise eine optische 1 und eine elektrische 1 zusammenfallen, so wird zur Verzögerungseinrichtung DEL2 eine optische 1 gesendet. Alle sonstigen Kombinationen führen zu einer optischen 0 oder bei geringer Phasendifferenz zu einer schmäleren optischen 1 am Eingang der Verzögerungseinrichtung DEL2. Die so erzeugte Korrelationsbitfolge wird nun in der Verzögerungseinrichtung DEL2 solange verzögert, bis die Korrelationsbitfolge wieder genau in einen Zeitabschnitt zwischen den an das Endgerät E1 gerichteten Datenpaketen eingefügt werden kann.

An dem Schalter SW1 kommt neben den Daten von der Verzögerungseinrichtung DEL2 ein optischer Datenstrom an, der aus einer Folge von Datenpaketen und zwischen diesen freigelassenen Zeitabschnitten besteht. Der Schalter SW1 wird dabei durch die in der Verzögerungseinrichtung DEL1 um dieselbe Zeitdauer wie die Verzögerungszeit der Verzögerungseinrichtung DEL2 verzögerte Bitfolgen von dem Bitfolgengenerators GEN2 angesteuert, wodurch der Schalter SW1 die Datenpakete von dem Koppelnetz SN an das Endgerät E1 weiterleitet und in den Zeitabschnitten zwischen den Datenpaketen die verzögerte Korrelationsbitfolge einfügt. Wird der Schalter SW1 also mit einer elektrischen 0 angesteuert, so wird der Datenstrom vom Koppelnetz SN und bei einer elektrischen 1 die Korrelationsbitfolge von der Verzögerungseinrichtung DEL2 über die Verbindungsleitung LE1 gesendet.

Es ist auch möglich, daß der Bitfolgengenerator GEN2 an den Schalter SW1 andere Bitfolgen als an den Schalter SW2 sendet. Er könnte an ihn z.B. während der Dauer einer Korrelationsbitfolge eine 1...1 Bitfolge und ansonsten eine 0...0 Bitfolge senden. Damit würde die Korrelationsbitfolge ebenfalls mit dem Schalter SW1 zwischen die Datenpakete eingefügt.

Es ist weiter möglich, daß der Schalter SW1 oder SW2 von einem optischen Richtungskoppler ersetzt wird, der das Synchronisations- oder Korrelationssignal von der Verbindungsleitung LE1 abzweigt bzw. einkoppelt. Wenn der Schalter SW2 derart ersetzt würde, so wäre ein zusätzlicher, von der Bitfolge des Bitfolgengenerators GEN2 angesteuerter Korrelator notwendig. Es ist auch möglich, daß ein solcher Korrelator aus zwei analogen Synchronisationssignalen ein analoges Korrelationssignal erzeugt, wenn an Stelle von digitalen Synchronisations- und Korrelationssignalen analoge verwendet werden.

## Patentansprüche

1. Verfahren zur Synchronisation mindestens eines ersten Taktes einer ersten Station (E1 bis E3) mit mindestens einem zweiten Takt einer zweiten Station (EX), bei dem ein den ersten Takt enthaltendes erstes Synchronisationssignal von der ersten (E1 bis E3) zur zweiten Station (EX) gesendet wird und bei dem das erste Synchronisationssignal in der zweiten Station (EX) mit einem den zweiten Takt enthaltenden zweiten Synchronisationssignal korreliert wird, wobei ein Korrelationssignal entsteht, **dadurch gekennzeichnet, daß** das Korrelationssignal von der zweiten Station (EX) an die erste Station (E1 bis E3) als Antwort auf das Senden des ersten Synchronisationssignals zurückgesendet wird, daß das Korrelationssignal in der ersten Station (E1 bis E3) ausgewertet wird und daß mittels des Ergebnisses dieser Auswertung der erste Takt der ersten Station (E1 bis E3) nachgeregelt wird.

2. Verfahren nach Anspruch 1, **dadurch gekennzeichnet, daß** das erste und das zweite Synchronisationssignal von einer ersten bzw. einer zweiten Synchronisationsbitfolge gebildet wird, und daß die beiden Synchronisationsbitfolgen miteinander korreliert werden, indem die erste Synchronisationsbitfolge über eine von der zweiten Synchronisationsbitfolge gesteuerte Schalteinrichtung (SUB1 bis SUB3) geführt wird, die eine Korrelationsbitfolge erzeugt und diese an die erste Station zurücksendet.

3. Verfahren nach Anspruch 1, **dadurch gekennzeichnet, daß** ein erster Bit- und ein erster Rahmentakt der ersten Station (E1 bis E3) auf einen zweiten Bit- und einen zweiten Rahmentakt der zweiten Station (EX) synchronisiert wird.

4. Verfahren nach Anspruch 2 und 3, **dadurch gekennzeichnet, daß** die erste Station (E1 bis E3) an die zweite Station (EX) erste Datenpakete mit dem ersten Bit- und mit dem ersten Rahmentakt sendet und daß die erste Synchronisationsbitfolge zwischen den ersten Datenpaketen von der ersten Station (E1 bis E3) zur zweiten Station (EX) gesendet wird.

5. Verfahren nach Anspruch 2 und 3, **dadurch gekennzeichnet, daß** die zweite Station (EX) an die erste Station (E1 bis E3) zweite Datenpakete sendet und daß die Korrelationsbitfolge um eine konstante Zeitdauer verzögert wird, die so gewählt wird, daß bei Synchronität der Takte die Korrelationsbitfolge zwischen den zweiten Datenpaketen von der zweiten Station (EX) zur ersten Station (E1 bis E3) gesendet wird.

6. Synchronisationseinrichtung (SYNC1) für eine erste Station (E1) zur Synchronisation mindestens eines ersten Taktes der ersten Station (E1) mit mindestens einem zweiten Takt einer zweiten Station (EX), mit einem Generator (GEN1) zur Erzeugung eines den ersten Takt enthaltenden ersten Synchronisationssignals und mit einer Sendeeinrichtung (SEND) zum Senden des ersten Synchronisationssignals an die zweite Station (EX), **dadurch gekennzeichnet, daß** die Synchronisationseinrichtung (SYNC1) mit einer Empfangseinrichtung (REC) zum Empfang eines Korrelationssignals von der zweiten Station (EX), mit einer Auswerteeinrichtung (ANALY) und mit einer Steuereinrichtung (CONTR) versehen ist, daß die Auswerteeinrichtung (ANALY) so ausgestaltet ist, daß sie aus dem Korrelationssignal die Taktabweichung zwischen dem ersten und dem zweiten Takt bestimmt, und daß die Steuereinrichtung (CONTR) so ausgestaltet ist, daß sie mittels der von der Auswerteeinrichtung (ANALY) bestimmten Taktabweichung den ersten Takt nachregelt.

7. Synchronisationseinrichtung (SYNC1) nach Anspruch 6, **dadurch gekennzeichnet, daß** sie Teil eines Endgeräts (E1) zum Anschluß an eine Vermittlungsstelle (EX) ist, und daß die Synchronisationseinrichtung (SYNC1) zur Synchronisation mindestens eines ersten Taktes des Endgerätes (E1) auf mindestens einen zweiten Takt der Vermittlungsstelle (EX) dient.

8. Synchronisationseinrichtung (SYNC2) für eine zweite Station (EX) zur Synchronisation mindestens eines ersten Taktes einer ersten Station (E1 bis E3) mit mindestens einem zweiten Takt der zweiten Station (EX), mit einem Generator (GEN2) zur Erzeugung eines den zweiten Takt enthaltenden zweiten Synchronisationssignals, und mit einem Korrelator (SW2) zum Korrelieren des zweiten Synchronisationssignals mit einem den ersten Takt enthaltenden ersten Synchronisationssignal, **dadurch gekennzeichnet, daß** die Synchronisationseinrichtung (SYNC2) mit einer Sendeeinrichtung versehen ist, die so ausgestaltet ist, daß sie vom Korrelator (SW2) ein Korrelationssignal empfängt, das dem Ergebnis der Korrelation des ersten mit dem zweiten Synchronisationssignal entspricht und daß sie dieses Korrelationssignal an die erste Station (E1) sendet.

9. Synchronisationseinrichtung (SYNC2) nach Anspruch 8, **dadurch gekennzeichnet, daß** das erste Synchronisationssignal und das Korrelationssignal optische Signale sind, und daß der Korrelator (SW2) und die Sendeeinrichtung jeweils einen vom zweiten Synchronisationssignal angesteuerten optischen Schalter (SW2; SW1) enthalten.

10. Synchronisationseinrichtung (SYNC2) nach Anspruch 8, **dadurch gekennzeichnet, daß** sie Teil einer Vermittlungsstelle (EX) ist, und daß sie zur Synchronisation von mindestens einem ersten Takt mindestens eines Endgerätes (E1 bis E3) auf mindestens einen zweiten Takt der Vermittlungsstelle dient.

## Claims

1. Method for synchronization of at least one first clock of a first station (E1 to E3) with at least one second clock of a second station (EX), in which a first synchronization signal containing the first clock is sent from the first (E1 to E3) to the second station (EX) and in which the first synchronization signal is correlated in the second station (EX) with a second synchronization signal containing the second clock, resulting in a correlation signal, **characterized in that** the correlation signal is sent back from the second station (EX) to the first station (E1 to E3) as response to the sending of the first synchronization signal, that the correlation signal is evaluated in the first station (E1 to E3) and that the first clock of the first station (E1 to E3) is corrected using the result of this evaluation.

2. Method according to Claim 1, **characterized in that** the first and the second synchronization signal is formed by a first and a second synchronization bit sequence respectively, and that the two synchronization bit sequences are correlated with each other, **in that** the first synchronization bit sequence is led via a switching unit (SUB1 to SUB3) controlled by the second synchronization bit sequence, said switching unit generating a correlation bit sequence and sending this back to the first station.

3. Method according to Claim 1, **characterized in that** a first bit timing and a first frame timing of the first station (E1 to E3) is synchronized on a second bit timing and a second frame timing of the second station (EX).

4. Method according to Claim 2 and 3, **characterized in that** the first station (E1 to E3) sends first data packets to the second station (EX) with the first bit and frame timing, and that the first synchronization bit sequence is sent between the first data packets from the first station (E1 to E3) to the second station (EX).

5. Method according to Claim 2 and 3, **characterized in that** the second station (EX) sends second data packets to the first station (E1 to E3) and that the correlation bit sequence is delayed by a constant period of time, which is selected such that with synchronism of the clocks the correlation bit sequence is sent between the second data packets from the second station (EX) to the first station (E1 to E3).

6. Synchronization device (SYNC1) for a first station (E1) for synchronization of at least one first clock of the first station (E1) with at least one second clock of a second station (EX), with a generator (GEN1) for creating a first synchronization signal containing the first clock and with a sending facility (SEND) for sending the first synchronization signal to the second station (EX), **characterized in that** the synchronization device (SYNC1) is equipped with a receiving facility (REC) for receiving a correlation signal from the second station (EX), with an evaluation facility (ANALY) and with a control device (CONTR), that the evaluation facility (ANALY) is designed in such a way that it determines from the correlation signal the clock drift between the first and the second clock, and that the control device (CONTR) is designed in such a way that it corrects the first clock using the clock drift determined by the evaluation facility (ANALY).

7. Synchronization device (SYNC2) for a second station (EX) for synchronization of at least one first clock of a first station (E1 to E3) with at least one second clock of the second station (EX), with a generator (GEN2) for creating a second synchronization signal containing the second clock, and with a correlator (SW2) for correlating the second synchronization signal with a first synchronization signal containing the first clock, **characterized in that** the synchronization device (SYNC2) is equipped with a sending facility, which is designed in such a way that it receives from the correlator (SW2) a correlation signal, which corresponds to the result of the correlation of the first synchronization signal with the second and that it sends this correlation signal to the first station (E1).

8. Synchronization device (SYNC2) according to Claim 7, **characterized in that** the first synchronization signal and the correlation signal are optical signals, and that the correlator (SW2) and the sending facility each contain an optical switch (SW2; SW1) driven by the second synchronization signal.

9. Terminal (E1) for connection to an exchange (EX), with a synchronization device (SYNC1) for synchronization of at least one first clock of the terminal (E1) on at least one second clock of the exchange (EX), **characterized in that** the terminal (E1) is equipped with a synchronization device (SYNC1), which is equipped with a generator (GEN1) for creating a first synchronization signal containing the first clock, with a sending facility (SEND) for sending the first synchronization signal to the exchange (EX), with a receiving facility for receiving a correlation signal from the exchange, with an evaluation facility (ANALY) and with a control device (CONTR), that the evaluation facility (ANALY) is designed in such a way that it determines from the correlation signal the clock drift between the first and the second clock, and that the control device (CONTR) is designed in such a way that it corrects the first clock using the clock drift determined by the evaluation facility (ANALY).

10. Exchange (EX) with a synchronization device (SYNC2) for synchronization of at least one first clock of at least one terminal (E1 to E3) on at least one second clock of the exchange (EX), **characterized in that** the synchronization device (SYNC2) is equipped with a generator (GEN2) for creating a second synchronization signal containing the second clock, with at least one correlator (SW2) for correlating a first synchronization signal containing the first clock with the second synchronization signal and with at least one sending facility, and that the sending facility is designed in such a way that it receives a correlation signal from the assigned correlator (SW2) as the result of the correlation of the first synchronization signal with the second and that it sends this correlation signal to the terminal (E1).

## Revendications

1. Procédé pour la synchronisation d'au moins un premier rythme d'une première station (E1 à E3) comprenant au moins un second rythme d'une seconde station (EX), dans lequel un premier signal de synchronisation contenant le premier rythme est envoyé de la première station (E1 à E3) à la seconde station (EX) et dans lequel le premier signal de synchronisation dans la seconde station (EX) est mis en corrélation avec un second signal de synchronisation contenant le second rythme, ce qui entraîne la formation d'un signal de corrélation, **caractérisé en ce que** le signal de corrélation est renvoyé de la seconde station (EX) à la première station (E1 à E3) comme réponse à l'envoi du premier signal de synchronisation, **en ce que** le signal de corrélation est analysé dans la première station (E1 à E3) et **en ce que** le premier rythme de la première station (E1 à E3) est réajusté au moyen du résultat de cette analyse.

2. Procédé selon la revendication 1, **caractérisé en ce que** les premier et second signaux de synchronisation sont formés par une première et une seconde séquences de bits de synchronisation et **en ce que** les deux séquences de bits de synchronisation sont mises en corrélation entre elles du fait que la première séquence de bits de synchronisation est guidée au moyen d'un dispositif de commutation (SUB1 à SUB3) commandé par la seconde séquence de bits de synchronisation, lequel dispositif génère une séquence de bits de corrélation et renvoie celle-ci à la première station.

3. Procédé selon la revendication 1, **caractérisé en ce qu'**un premier rythme binaire et un premier rythme de base de la première station (E1 à E3) sont synchronisés sur un second rythme binaire et un second rythme de base de la seconde station (EX).

4. Procédé selon les revendications 2 et 3, **caractérisé en ce que** la première station (E1 à E3) envoie à la seconde station (EX) des premiers paquets de données avec le premier rythme binaire et avec le premier rythme de base et **en ce que** la première séquence de bits de synchronisation entre les premiers paquets de données est envoyée de la première station (E1 à E3) à la seconde station (EX).

5. Procédé selon les revendications 2 et 3, **caractérisé en ce que** la seconde station (EX) envoie des seconds paquets de données à la première station (E1 à E3) et **en ce que** la séquence de bits de corrélation est retardée d'une durée constante, qui est choisie de telle sorte que, en cas de synchronisation des rythmes, la séquence de bits de corrélation entre les seconds paquets de données est envoyée de la seconde station (EX) à la première station (E1 à E3).

6. Dispositif de synchronisation (SYNC1) pour une première station (E1) pour la synchronisation d'au moins un premier rythme de la première station (E1) avec au moins un second rythme d'une seconde station (EX), avec un générateur (GEN1) pour la génération d'un premier signal de synchronisation contenant le premier rythme et avec un dispositif d'émission (SEND) pour l'émission du premier signal de synchronisation à la seconde station (EX), **caractérisé en ce que** le dispositif de synchronisation (SYNC1) est doté d'un dispositif de réception (REC) pour la réception d'un signal de corrélation provenant de la seconde station (EX), d'un dispositif d'analyse (ANALY) et d'un dispositif de commande (CONTR), **en ce que** le dispositif d'analyse (ANALY) est équipé de telle sorte qu'il détermine à partir du signal de corrélation l'écart de rythme entre le premier et le second rythmes, et **en ce que** le dispositif de commande (CONTR) est conçu de telle sorte qu'il réajuste le premier rythme au moyen de l'écart de rythme déterminé par le dispositif d'analyse (ANALY).

7. Dispositif de synchronisation (SYNC2) pour une seconde station (EX) pour la synchronisation d'au moins un premier rythme d'une première station (E1 à E3) comprenant au moins un second rythme de la seconde station (EX), avec un générateur (GEN2) pour la génération d'un second signal de synchronisation contenant le second rythme, et avec un corrélateur (SW2) pour la corrélation du second signal de synchronisation avec un premier signal de synchronisation contenant le premier rythme, **caractérisé en ce que** le dispositif de synchronisation (SYNC2) est doté d'un dispositif d'émission, qui est conçu de telle sorte qu'il reçoit du corrélateur (SW2) un signal de corrélation qui correspond au résultat de la corrélation du premier signal de synchronisation avec le second signal de synchronisation et **en ce qu'**il envoie ce signal de corrélation à la première station (E1).

8. Dispositif de synchronisation (SYNC2) selon la revendication 7, **caractérisé en ce que** le premier signal de synchronisation et le signal de corrélation sont des signaux optiques et **en ce que** le corrélateur (SW2) et le dispositif d'émission contiennent chacun un commutateur (SW2; SW1) optique activé par le second signal de synchronisation.

9. Terminal (E1) pour le raccordement à un centre de commutation (EX), avec un dispositif de synchronisation (SYNC1) pour la synchronisation d'au moins un premier rythme du terminal (E1) sur au moins un second rythme du centre de commutation (EX), **caractérisé en ce que** le terminal (E1) est doté d'un dispositif de synchronisation (SYNC1), qui est doté d'un générateur (GEN1) pour la génération d'un premier signal de synchronisation contenant le premier rythme, d'un dispositif d'émission (SEND) pour l'envoi du premier signal de synchronisation au centre de commutation (EX), d'un dispositif de réception pour la réception d'un signal de corrélation du centre de commutation, d'un dispositif d'analyse (ANALY) et d'un dispositif de commande (CONTR), **en ce que** le dispositif d'analyse (ANALY) est conçu de telle sorte qu'il détermine à partir du signal de corrélation l'écart de rythme entre le premier rythme et le second rythme, et **en ce que** le dispositif de commande (CONTR) est conçu de telle sorte qu'il réajuste le premier rythme au moyen de l'écart de rythme déterminé par le dispositif d'analyse (ANALY).

10. Centre de commutation (EX) comprenant un dispositif de synchronisation (SYNC2) pour la synchronisation d'au moins un premier rythme d'au moins un terminal (E1 à E3) sur au moins un second rythme du centre de commutation (EX), **caractérisé en ce que** le dispositif de synchronisation (SYNC2) est doté d'un générateur (GEN2) pour la génération d'un second signal de synchronisation contenant le second rythme, d'au moins un corrélateur (SW2) pour la corrélation d'un premier signal de synchronisation contenant le premier rythme avec le second signal de synchronisation et d'au moins un dispositif d'émission et **en ce que** le dispositif d'émission est conçu de telle sorte qu'il reçoit du corrélateur (SW2) attribué un signal de corrélation comme résultat de la corrélation du premier signal de corrélation avec le second signal de corrélation et **en ce qu'**il envoie ce signal de corrélation au terminal (E1).
